# EUROPÄISCHE PATENTANMELDUNG

(11) **EP 1 424 133 A2**
(43) Veröffentlichungstag der Anmeldung: **02.06.2004**
(21) Anmeldenummer: 03104156.9
(22) Anmeldetag: 12.11.2003
(51) Int. Cl.: B04B 9/06

(54) **Fliehkraftabscheider**

(30) Priorität: 20.11.2002 DE 10254034
(71) Anmelder: Mann + Hummel GmbH, 71638 Ludwigsburg (DE)
(72) Erfinder: Hilpert, Torsten, 71729 Erdmannhausen (DE); Bühl, Heinz, 74235 Erlenbach (DE)

(57) **Zusammenfassung**

Die Erfindung betrifft einen Fliehkraftabscheider (1) zur Abscheidung von in einem Gasstrom (2) mitgeführten Fremdstoffen, bei der der Fliehkraftabscheider (1) mindestens ein drehbares Abscheideglied (3) aufweist. Zum Antrieb des Abscheidegliedes (3) ist ein Turbinenrad (4) vorgesehen.

## Beschreibung

Die Erfindung betrifft einen Fliehkraftabscheider zur Abscheidung von in einem Gasstrom mitgeführten Fremdstoffen mit den Merkmalen nach dem Oberbegriff des Anspruchs 1.

Fliehkraftabscheider zur Abscheidung von in einem Gasstrom mitgeführten Fremdstoffen werden bei einer Vielzahl von Anwendungen eingesetzt. Insbesondere bei Verbrennungsmotoren von Kraftfahrzeugen sind sogenannte "Blow-By-Gase" aus einem Kurbelgehäuse des Verbrennungsmotors mittels einer Kurbelgehäuseentlüftung abzuleiten. Die Blow-By-Gase werden dabei einem Ansaugkanal zur Ansaugung von Verbrennungsluft des Verbrennungsmotors zugeführt. Zur Erzielung einer guten Motorlaufleistung bei geringen Abgaswerten ist dabei eine Reinigung der Blow-By-Gase von mitgeführten Fremdstoffen wie Ölnebel oder dgl. erforderlich. Insbesondere bei Antriebsmotoren für Lastkraftwagen werden dazu Fliehkraftabscheider eingesetzt, bei denen ein drehbares Abscheideglied in der Kurbelgehäuseentlüftung angelagerte Ölpartikel durch Wirkung der Fliehkraft nach außen schleudert. Dort kann das sich sammelnde, aus dem Gasstrom abgeschiedene Öl entfernt werden.

Für eine wirkungsvolle Abscheidung sind hohe Drehzahlen des Abscheidegliedes erforderlich, die beispielsweise im Bereich von 1800 Umdrehungen pro Minute liegen. Der Antrieb des Abscheidegliedes erfordert eine bestimmte Antriebsleistung, wofür bei bekannten Ausführungen ein kostspieliger Elektromotor bereitgestellt wird. Neben dem Elektromotor selbst ist auch eine schmutz- und korrosionsgeschützte Stromversorgung sowie eine entsprechende Motorsteuerung erforderlich, die zu weiteren Kosten führen.

Um die unterschiedlichen Betriebsparameter und die unterschiedlichen Reinigungsaufgaben zu berücksichtigen ist jeweils eine entsprechend konzipierte Steuerung des Elektromotors erforderlich. Der Motor selbst ist für die maximal erforderliche Drehzahl bzw. Leistung auszulegen. Bei niedrigeren Drehzahlen bzw. Leistungen ist dieser Elektromotor dann überdimensioniert und arbeitet in unwirtschaftlichen Betriebspunkten.

Der Erfindung liegt die Aufgabe zugrunde, einen gattungsgemäßen Fliehkraftabscheider zu schaffen, dessen Antrieb einfacher und kostengünstiger ist.

Diese Aufgabe wird durch einen Fliehkraftabscheider mit den Merkmalen des Anspruchs 1 gelöst.

Dazu wird vorgeschlagen, daß zum Antrieb eines drehbaren Abscheidegliedes des Fliehkraftabscheiders ein durch einen Gasstrom antreibbares Turbinenrad vorgesehen ist. Ein derartiges Turbinenrad als Antriebsquelle ist klein, leicht und einfach zu fertigen und bietet dabei gute Antriebsleistung auch bei variierenden Betriebsparametern. Bei entsprechender Lagerung des Turbinenrades ist die entsprechende Turbine praktisch wartungsfrei und weist eine hohe Lebensdauer auf. Eine Regelung bzw. Steuerung der gewünschten Turbinenleistung kann in einfacher Weise mit geringem Aufwand über den antreibenden Gasstrom erfolgen.

Insbesondere beim Einsatz eines derartigen Fliehkraftabscheiders an einem Verbrennungsmotor steht eine Vielzahl geeigneter Gasstromquellen zur Verfügung. In einer vorteilhaften Ausgestaltung ist das Turbinenrad durch die Druckdifferenz vor und hinter einer Drosselklappe in einem Ansaugkanal des Verbrennungsmotors antreibbar. Das Turbinenrad ist dabei in einer die Drosselklappe umgehenden Bypaßleitung angeordnet. Abhängig von der Stellung der Drosselklappe entsteht eine mehr oder weniger hohe Druckdifferenz vor und hinter derselben. Die Druckdifferenz führt zu einer Ausbildung eines Luftstromes durch die Bypaßleitung. Dieser Luftstrom weist eine hinreichende Energiedichte zum Antrieb des Turbinenrades auf. Das Turbinenrad selbst ist bei der Beaufschlagung durch den genannten Luftstrom keinen besonderen mechanischen bzw. thermischen Belastungen ausgesetzt. Der gesamte Turbinenantrieb inklusive Lagerung, Gehäuse sowie entsprechender Leitungen kann einfach und kostengünstig aufgebaut sein.

In einer vorteilhaften alternativen Ausführung ist das Turbinenrad durch die Druckdifferenz eines Laders, insbesondere eines Abgasturboladers, antreibbar. Diese Variante ist vergleichbar zu der vorher beschriebenen Ausführung ausgebildet, wobei als Unterschied lediglich die Führung der Bypaßleitung vom Hochdruckteil des Laders über das Turbinenrad zum Niederdruckteil führt. Ein derartiger Lader kann hohe Druckdifferenzen erzeugen, in dessen Folge das Turbinenrad besonders klein und platzsparend ausgebildet sein kann. Abgasturbolader sind üblicherweise für den Vollastbetrieb des Verbrennungsmotors überdimensioniert, um bei geringen Motorleistungen noch eine hinreichende Ladeleistung zu liefern. Die Entnahme eines Gasstromes zum Antrieb des drehbaren Abscheidegliedes im Fliehkraftabscheider führt deshalb bei mittleren und höheren Motorleistungen nicht zu einer Reduzierung der Ladeleistung. Eine Beeinträchtigung des Betriebsverhaltens vom Verbrennungsmotor ist dabei vermieden.

Die erfindungsgemäße Anordnung kann ein beliebig ausgestaltetes drehbares Abscheideglied aufweisen. Als zweckmäßig hat sich eine Ausbildung des Abscheidegliedes als Tellerabscheider herausgestellt. Bei geringer erforderlicher Antriebsleistung weist der Tellerabscheider eine hohe Abscheidewirkung auf. In Verbindung mit einem Antrieb durch ein Turbinenrad ist die gewünschte Abscheideleistung über einen hohen Drehzahlbereich und damit über eine hohe Wirkungsbandbreite steuerbar bzw. regelbar.

In einer zweckmäßigen Ausbildung sind das Abscheideglied und das Turbinenrad achsgleich zueinander angeordnet, womit eine einfache Antriebsübertragung vom Turbinenrad zum Abscheideglied ermöglicht ist. Zusätzlicher Aufwand beispielsweise für einen Zahnrad- oder Riementrieb ist vermieden.

Zweckmäßig ist zwischen dem Abscheideglied und dem Turbinenrad eine Kupplung vorgesehen. Diese kann verschiedene Aufgaben hinsichtlich Demontierbarkeit, Ausgleich von Lage- und Winkeltoleranzen oder zur Schwingungsvermeidung erfüllen. Insbesondere ist dabei die Kupplung als eine zu- und abschaltbare Kupplung ausgeführt. In bestimmten Betriebspunkten kann dabei der Fliehkraftabscheider zu- bzw. abgeschaltet werden. Sofern keine Abschaltung erforderlich ist, kann im abgeschalteten Zustand das Turbinenrad frei drehen, ohne dem antreibenden Gasstrom nennenswerte Energie zu entziehen.

Als vorteilhafter Kompromiß hinsichtlich Antriebsleistung, Bauraum, Fertigungskosten und Lebensdauer hat sich eine Ausführung des Turbinenrades als Teil einer Radialturbine herausgestellt.

Ausführungsbeispiele der Erfindung sind im Folgenden anhand der Zeichnung näher beschrieben. Es zeigen:
- Fig. 1: in schematischer Ansicht einen Fliehkraftabscheider mit einem durch die Druckdifferenz vor und hinter einer Drosselklappe antreibbaren Turbinenrad und einer Anzahl von mittels des Turbinenrades angetriebener Tellerabscheider,
- Fig. 2: eine Variante der Anordnung nach Fig. 2 mit einer durch die Druckdifferenz eines Abgasturboladers antreibbaren Turbinenrad.

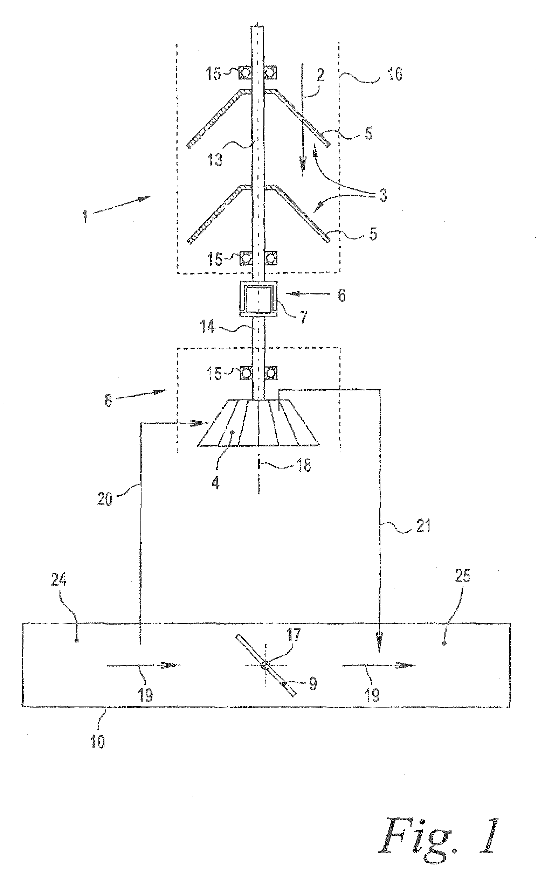

Fig. 1 zeigt in schematischer Ansicht einen Fliehkraftabscheider 1 mit einer Anzahl von drehbaren Abscheidegliedern 3. Die Abscheideglieder 3 sind im gezeigten Ausführungsbeispiel in einer angedeuteten Kurbelgehäuseentlüftung 16 eines nicht näher dargestellten Verbrennungsmotors angeordnet. Die Kurbelgehäuseentlüftung 16 ist von einem durch einen Pfeil 2 dargestellten Gasstrom durchströmt. Zur Abscheidung von im Gasstrom 2 mitgeführten Fremdstoffen ist mindestens ein drehbares Abscheideglied 3 vorgesehen. Im gezeigten Ausführungsbeispiel sind zwei Abscheideglieder 3 stellvertretend für eine Vielzahl davon dargestellt. Die Abscheideglieder 3 können beliebiger geeigneter Bauart sein und sind im gezeigten Ausführungsbeispiel als etwa konisch geformte Tellerabscheider 5 ausgeführt.

Zum Antrieb der Abscheideglieder 3 ist eine schematisch angedeutete Radialturbine 8 mit einem Turbinenrad 4 vorgesehen. Je nach Anwendungsfall kann auch die Anordnung einer Axialturbine oder dgl. zweckmäßig sein. Das Turbinenrad 4 ist auf einer Welle 14 und die Abscheideglieder 3 sind auf einer Welle 13 festgelegt. Die Abscheideglieder 3 und das Turbinenrad 4 sind achsgleich zueinander angeordnet, wobei die Wellen 13, 14 mittels Lagern 15 zusammen mit den Abschiedegliedern 3 bzw. des Turbinenrades 4 um eine gemeinsame Drehachse 18 drehbar gelagert sind.

Zwischen den Abscheidegliedern 3 und dem Turbinenrad 4 ist eine die beiden Wellen 13, 14 verbindende Kupplung 6 vorgesehen. Die Kupplung 6 ist dabei als zu- und abschaltbare Kupplung 7 ausgeführt.

Der nicht näher dargestellte Verbrennungsmotor weist einen Ansaugkanal 10 zur Ansaugung eines durch Pfeile 19 angedeuteten Ansaugluftstromes auf. Die Steuerung des Ansaugluftstromes 19 zur Leistungssteuerung des Verbrennungsmotors erfolgt mittels einer um eine Schwenkachse 17 schwenkbaren Drosselklappe 9. Im zumindest teilweise geschlossenen Zustand der Drosselklappe 9 bildet sich stromauf eine Hochdruckseite 24 und stromab der Drosselklappe 9 eine Niederdruckseite 25.

Das Turbinenrad 4 ist durch die Druckdifferenz vor und hinter der Drosselklappe, also der Druckdifferenz zwischen der Hochdruckseite 24 und der Niederdruckseite 25 antreibbar. Dazu ist eine Beaufschlagung des Turbinenrades 4 mit einem von der Hochdruckseite 24 abgezweigten, durch einen Pfeil 20 angedeuteten Hochdruckstrom vorgesehen. Ein radial innenseitig des Turbinenrades 4 austretender Niederdruckstrom 21 ist zur Niederdruckseite 25 zurückgeleitet.

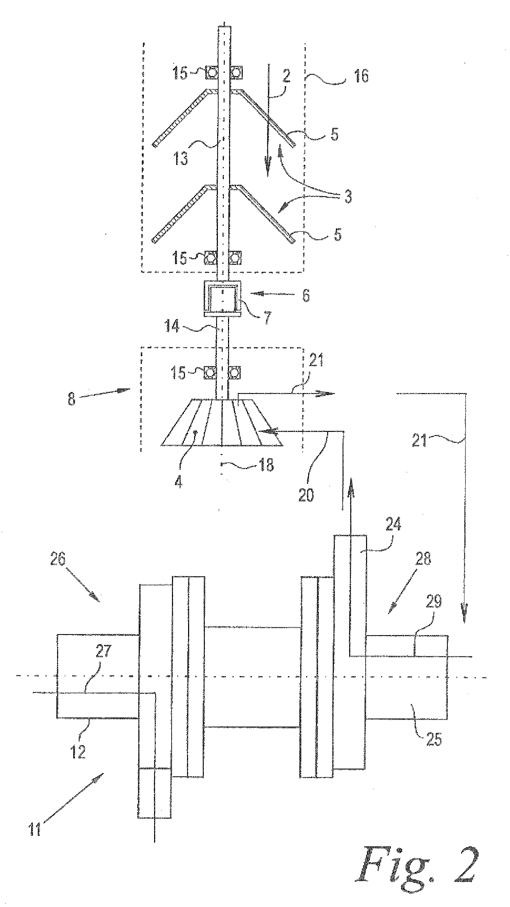

Fig. 2 zeigt eine Variante nach Fig. 1, bei der zum Antrieb des Turbinenrades 4 die Druckdifferenz eines Laders 11 vorgesehen ist. Der Lader 11 ist im gezeigten Ausführungsbeispiel als Abgasturbolader 12 ausgebildet. Ebenso kann ein Roots-Gebläse, ein Kompressor oder dergleichen vorgesehen sein. Der Abgasturbolader 12 weist eine Abgasturbine 26 und einen von der Abgasturbine 26 angetriebenen Verdichter 28 auf. Die Abgasturbine 26 ist etwa entlang des Pfeiles 27 radial von außen nach innen von einem Abgasstrom durchströmt. Über die dabei gewonnene mechanische Energie ist der Verdichter 28 angetrieben, wobei etwa entlang eines Pfeiles 29 ein Verbrennungsluftstrom von einer radial innen liegenden Niederdruckseite 25 zu einer radial außen liegenden Hochdruckseite 24 gefördert wird. Zum Antrieb des Turbinenrades 4 ist eine Abzweigung eines Hochdruckstromes 20 aus dem Verbrennungsluftstrom 29 im Bereich der Hochdruckseite 24 vorgesehen. Eine Rückführung dieses abgezweigten Gasstromes von der Radialturbine 8 als Niederdruckstrom erfolgt, wie schematisch durch die Pfeile 21 angedeutet, zur Niederdruckseite 25 des Verdichters 28.

In den übrigen Merkmalen und Bezugszeichen stimmt die Anordnung nach Fig. 2 mit der Anordnung nach Fig. 1 überein.

Neben den gezeigten Ausführungsbeispielen können zum Antrieb des Turbinenrades 4 auch weitere geeignete Gasströme zweckmäßig sein. Beispielsweise kann ein Antrieb des Turbinenrades 4 auch durch den Abgasstrom 27 erfolgen.

## Patentansprüche

1. Fliehkraftabscheider zur Abscheidung von in einem Gasstrom (2) mitgeführten Fremdstoffen, wobei der Fliehkraftabscheider (1) mindestens ein drehbares Abscheideglied (3) aufweist,
**dadurch gekennzeichnet, daß** zum Antrieb des Abscheidegliedes (3) ein Turbinenrad (4) vorgesehen ist.

2. Fliehkraftabscheider nach Anspruch 1,
**dadurch gekennzeichnet, daß** das Abscheideglied (3) ein Tellerabscheider (5) ist.

3. Fliehkraftabscheider nach Anspruch 1 oder 2,
**dadurch gekennzeichnet, daß** das Abscheideglied (3) und das Turbinenrad (4) achsgleich zueinander angeordnet sind.

4. Fliehkraftabscheider nach einem der Ansprüche 1 bis 3,
**dadurch gekennzeichnet, daß** zwischen dem Abscheideglied (3) und dem Turbinenrad (4) eine Kupplung (6) vorgesehen ist.

5. Fliehkraftabscheider nach Anspruch 4,
**dadurch gekennzeichnet, daß** die Kupplung (6) eine zuund abschaltbare Kupplung (7) ist.

6. Fliehkraftabscheider nach einem der Ansprüche 1 bis 5,
**dadurch gekennzeichnet, daß** das Turbinenrad (4) als Teil einer Radialturbine (8) ausgeführt ist.

7. Fliehkraftabscheider nach einem der Ansprüche 1 bis 6,
**dadurch gekennzeichnet, daß** das Turbinenrad (4) durch eine Druckdifferenz vor und hinter einer Drosselklappe (9) in einem Ansaugkanal (10) eines Verbrennungsmotors antreibbar ist.

8. Fliehkraftabscheider nach einem der Ansprüche 1 bis 6,
**dadurch gekennzeichnet, daß** das Turbinenrad (4) durch die Druckdifferenz eines Laders (11), insbesondere eines Abgasturboladers (12) antreibbar ist.
